# EUROPEAN PATENT SPECIFICATION

(11) **EP 2 307 712 B1**
(45) Date of publication and mention of the grant of the patent: **22.02.2012**
(21) Application number: 09776169.6
(22) Date of filing: 09.07.2009
(51) Int. Cl.: F03D 1/00, B63B 35/00, B66C 23/52

(54) **A METHOD FOR ERECTING A WIND TURBINE ON AN OFFSHORE SITE AND A VESSEL FOR ERECTING A WIND TURBINE ON AN OFFSHORE SITE**
VERFAHREN ZUM ERRICHTEN EINER WINDTURBINE AN EINEM OFFSHORE-STANDORT UND SCHIFF ZUM ERRICHTEN EINER WINDTURBINE AN EINEM OFFSHORE-STANDORT
PROCÉDÉ ET NAVIRE POUR ÉRIGER UNE ÉOLIENNE SUR UN SITE OFFSHORE

(30) Priority: 14.07.2008 DK 200800990; 14.07.2008 US 80484 P
(43) Date of publication of application: 13.04.2011
(73) Proprietor: Vestas Wind Systems A/S, 8200 Aarhus N (DK)
(72) Inventor: SOE-JENSEN, Anders, DK-3520 Farum (DK)
(74) Representative: Henriksen, Michael
(86) International application number: PCT/DK2009/000166
(87) International publication number: WO 2010/006602

(56) References cited:
- EP-A2- 0 371 813
- WO-A1-00/77306
- WO-A1-2006/080850
- US-A1- 2005 286 979

## Description

### Background of the invention

The invention relates to a method for transporting and erecting a wind turbine on an offshore, site and a vessel for erecting a wind turbine on an offshore site.

### Description of related art

The size of modern wind turbines is such that erecting the wind turbines often requires highly specialized cranes such as cranes adapted for lifting wind turbine components to heights significantly above ground or sea level.

The number of said cranes is limited and other engagements of the cranes may cause a problem of delays and increased costs in the process.

The significance of the problem is increased by the large number of crane lifts to great heights which is included in erecting a modern wind turbine e.g. the crane lifts of the tower segments followed by the crane lifts of the nacelle and rotor blades.

EP 0 371 813 A2 relates to a handling device for manipulating an elongated component. The handling device comprises a base 2 which may be adapted to a lift apparatus on a ship. The base carries a pillar 6 and the pillar 6 pivotally carries a telescopic arm 8 comprising arm sections 10,12,14,16. The end of the telescopic arm carries a mounting 32 which in turn carries a gantry 36. The gantry 36 is pivotally suspended in a pivot 34 of the arm section 16 of the arm 8. The handling device of EP 0 371 813 A2 may by virtue of the telescopic arm 8 which is pivotally suspended in pillar 6 and by virtue of the gantry pivotally suspended in the telescopic arm 8 provide for the movements and rotation necessary in order to arrange an elongated element 50 from a horizontal position to a vertical position The handling device of EP 0 371 813 A2 is intended to be hidden in a compartment of a ship's deck or the like. For this reason some of the elements of the handling device are of a somewhat complicated telescopic construction and the first boom is not a fixed length boom.

US 2005/0286979 A1 relates to a foundation for mounting an offshore structure and an apparatus for mounting such structure. The apparatus comprises a barge that comprises an A-frame for shifting the position of the structure from a declined position to an upright position. US 2005/0286979 A1 does not disclose that the A-frame comprises means enabling a purely horizontal positioning of said elongated wind turbine component, including a purely horizontal adjustment of the distance of said elongated wind turbine component in relation to the vessel.

The great heights complicate the lifts by the high requirements to the skills of the crane operators in handling and positioning the wind turbine components. These requirements are further increased if the lifts are performed at an offshore site by the changing nature of the sea surface.

It is therefore an object of the invention to provide crane and installation technique which simplifies the process of establishing a modem wind turbine on an offshore site such as from a vessel.

### The invention

The invention relates to a method for erecting a wind turbine on an offshore site, said method comprises the steps of:
- positioning a first boom of a crane in a substantially horizontal position, said first boom being a fixed length boom, and said crane being located on a vessel on which said wind turbine component is transported,
- arranging a substantially horizontal positioned elongated wind turbine component on said first boom,
- connecting a distal part of said elongated wind turbine component to a second boom of said crane, said distal part is the upper part of the wind turbine component when the wind turbine is erected, and said second boom is extending at an angle from the longitudinal extension of said first boom,
- elevating said first boom to a substantially vertical position,
- modifying the position in the horizontal plane of said elongated wind turbine component, in order to reach a desired erecting position for the component, and
- disconnecting said distal part of said elongated wind turbine component from said second boom of said crane,
characterised in that said modification of the position in the horizontal plane is performed by positioning said crane in the horizontal plane in relation to the vessel and/or by positioning said elongated wind turbine component in relation to said first boom of the crane.

By using the invented method it is possible to erect a wind turbine in a simple and reliable manner at an offshore site and with a high degree of flexibility in relation to the weather conditions.

Furthermore the method ensures a high degree of flexibility in relation to positioning the wind turbine component at its desired erecting position which in turn is easy, fast and feasible.

Thereby the method enables a shorter installation time and facilitates a lesser expensive installation as the need of separate crane and transport vessels is reduced.

Even further a flexible installation method is ensured, where numerous combinations of the sequence of which wind turbine components are installed at one or more sites of installation is possible.

By the feature that said crane base is located on a vessel on which said wind turbine component is transported, it is possible to establish said wind turbine from a vessel which may be the same vessel that have been used for transporting the wind turbine and wind turbine components e.g. from an onshore site to the offshore site. This in turn results in shorter installation time and possible use of fewer vessels for the installation.

In another aspect of the invention said elongated wind turbine component comprises an assembly of a wind turbine tower, wind turbine nacelle and wind turbine rotor. Hereby it is possible to erect the wind turbine with fewer large cranes and machinery at the site, with fewer lifts which turn decrease the installation time and costs. Furthermore the utilization of installation equipment such as vessels and/or cranes is optimized and it is ensured that the need for specialized cranes and/or other equipment is minimized.

In another aspect of the invention said elongated wind turbine component includes the foundation or parts of the foundation. Hereby it is possible to even further minimize the use of machinery at the site and in turn further decrease the installation time and costs.

In another aspect of the invention said elongated wind turbine component is a wind turbine tower. Hereby it is ensured that one of the largest components of a wind turbine can be handled in a fast and reliable way, which in turn results in minimized installation costs.

In one aspect of the invention, said method further comprises the step of mooring the vessel substantially at the desired erecting position for the component. Hereby it is ensured that the vessel is hold in a correct position in relation to the installation site and that the vessel is kept sufficiently steady during the installation process i.e. the vessel can be held in positions in such a way that the influence on the movement of the vessel in all directions due to environmental parameters such as waves, tidal, current and/or wind e.g. as to ensure an easy and correct positioning of the wind turbine component over the desired erecting position.

By the feature that said modifying the position in the horizontal plane is performed by positioning said crane in the horizontal plane in relation to the vessel, it is ensured that the wind turbine component can be correct positioned in the horizontal plane over the desired erecting position e.g. by positioning the crane base by means of movable cantilever booms. Furthermore it is ensured that the crane itself is being correctly positioned as for preparation for the rest of the installation procedure. It is even further ensured that the difficult positioning of the vessel need not be extremely correct, as part of the positioning in the horizontal plane is overtaken by the crane which often is easier to handle.

By the feature that said modifying the position in the horizontal plane is performed by positioning said elongated wind turbine component in relation to said first boom of the crane, it is possible to obtain an indeed very accurate positioning in the horizontal plane of the wind turbine component in relation to the desired erecting position e.g. over a prepared foundation and it is further possible to obtain a precise alignment of e.g. mounting holes on the wind turbine component and the prepared foundation respectively. It is even further ensured by positioning the component in relation to said first boom of the crane that the positioning can be realised in various ways e.g. by "pushing" the component away from the first boom by e.g. hydraulic arms mounted on the boom, by engaging movable means mounted on the second boom which can move the component in the horizontal plane along the longitudinal axis of said second boom etc.

The invention also relates to a vessel for transporting and erecting a wind turbine on an offshore site, said vessel comprises at least one crane comprising:
- a first boom of the crane prepared for holding an elongated wind turbine component, said first boom being a fixed length boom,
- an elevation drive for elevating said first boom together with the elongated wind turbine component between substantially horizontal position and substantially vertical position,
- a second boom connected to said first boom of the crane,
- a connector for connecting a distal part of the elongated wind turbine component arranged on said first boom to said second boom of the crane, said distal part being the upper part of the wind turbine component when the wind turbine is erected, and
- one or more mechanisms for modifying the position in the horizontal plane of said elongated wind turbine component when connected to the connector, in order to reach a desired erecting position for the component,
characterised in that said one or more mechanisms for modifying the position in the horizontal plane of said elongated wind turbine component is prepared for moving said crane in relation to the vessel and/or is prepared for moving said elongated wind turbine component in relation to said first boom, thereby enabling a purely horizontal positioning of said elongated wind turbine component, including a purely horizontal adjustment of the distance of said elongated wind turbine component in relation to the vessel.

Hereby it is possible to erect a wind turbine in a simple and reliable manner at an offshore site and with a high degree of flexibility in relation to the weather conditions. Furthermore a shorter installation time is enabled as well as the use of specialized vessels is minimized. It is furthermore ensured that only relatively simple machinery is required for the installation.

In one aspect of the invention said second boom extends at an angle from the longitudinal extension of said first boom, said angle is in the range of 90° ± 45°. Hereby it is ensured that the second boom has a sufficient operating range as to be able to position the wind turbine component within a large radius of the crane.

By the feature that at least one of said mechanisms for modifying the position is prepared for moving and/or rotating said crane in relation to the vessel, it is ensured that the wind turbine component can be positioned accurately at the installation site and that the installation is minimal dependent of the actual positioning of the vessel as the crane base can be moved in relation to the vessel.

By the feature that at least one of said mechanisms for modifying the position is prepared for moving and/or rotating said elongated wind turbine component in relation to said first boom, it is possible to obtain an accurate positioning of the wind turbine component in relation to an installation on a site e.g. on prepared foundation and it is further possible to obtain a precise alignment of e.g. mounting holes on the wind turbine component and the prepared foundation respectively.

In another aspect of the invention, said has room for holding more than one elongated wind turbine component at a time. Hereby it is ensured that the vessel can carry more wind turbines and/or wind turbine components whereby the installation time is further drastically reduced as the vessel only needs to collect components at distance sites a minimum of times.

In one aspect of the invention said one or more mechanisms for modifying the position in the horizontal plane of said elongated wind turbine component comprises crane positioning means comprising moveable cantilever booms for positioning the crane in a horizontal plane.

In one aspect of the invention said one or more mechanisms for modifying the position in the horizontal plane of said elongated wind turbine component comprises hydraulic arms mounted on the first boom and to be attached between the boom and the wind turbine component.

In one aspect of the invention said one or more mechanisms for modifying the position in the horizontal plane of said elongated wind turbine component comprises a derrick positioned at the second boom.

The invention also relates to the use of a vessel according to the invention for erecting a wind turbine on an offshore site.

### Figures

The invention will be described in the following with reference to the figures in which
- fig. 1: illustrates a large modem wind turbine,
- figs. 2 to 8: illustrate schematically various steps of erecting an offshore wind turbine with a method and a vessel according to various embodiments of the invention, and
- fig. 9: illustrates schematically a mooring system connected to the vessel.

### Detailed description

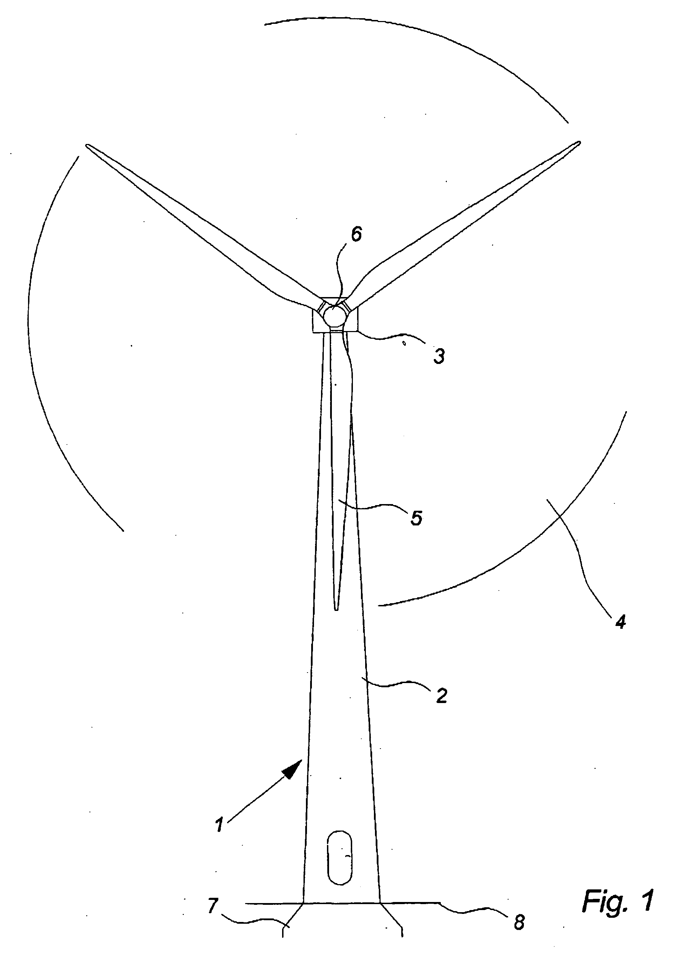

Fig. 1 illustrates a wind turbine 1, comprising a wind turbine tower 2 and a wind turbine nacelle 3 positioned on top of the tower 2. The wind turbine rotor 4 comprises at least one wind turbine blade e.g. three wind turbine blades 5 as illustrated in the figure. The rotor is mounted on a hub 6, which is connected to the nacelle 3 through the low speed shaft extending out of the nacelle front.

The wind turbine tower 2 is erected on a foundation 7 either onshore of offshore above sea level 8.

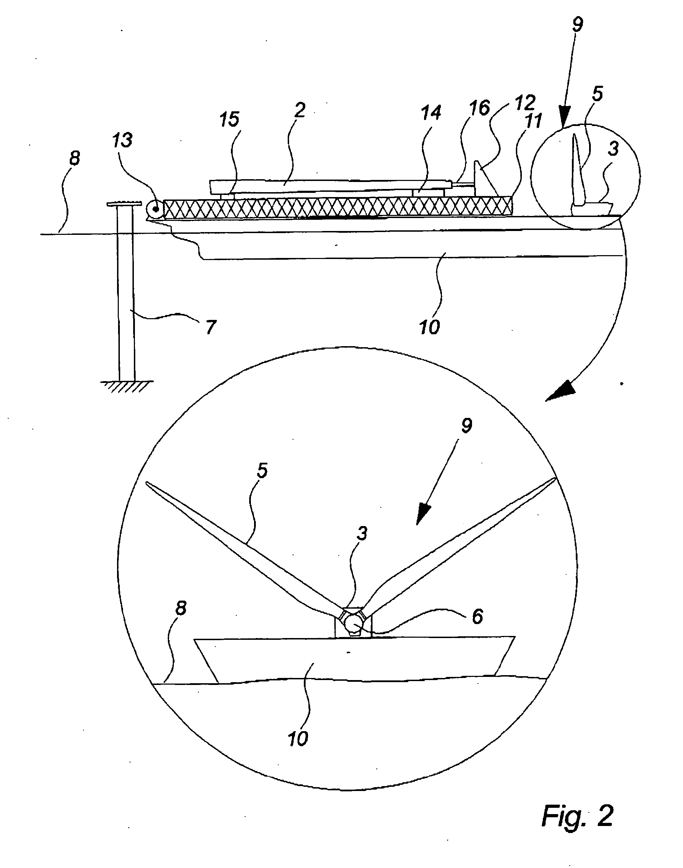

Figs. 2 to 7 illustrate schematically various steps of erecting an offshore wind turbine with a method according to various embodiments of the invention.

Fig. 2 illustrates schematically the initial steps of transporting a wind turbine 1 to an offshore site on the deck of e.g. a jack-up ship, barge or vessel 10 according to various embodiments of the invention.

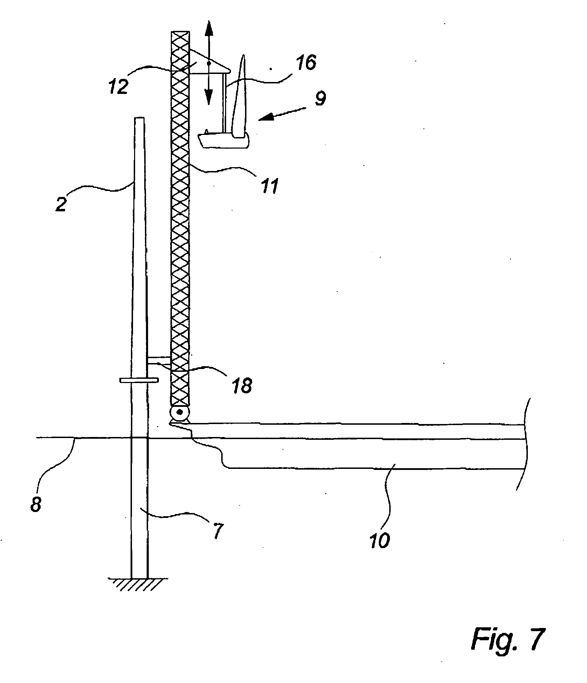

Normally the wind turbine is transported in sections from a location where they are loaded on the vessel 10 to the site of installation. The sections includes the complete wind turbine tower 2 and a unit 9 comprising the nacelle 3 and hub 6 with two wind turbine blades 5 fitted in a "bunny ear" configuration i.e. two of three blades 5 is mounted on the hub 6. For one embodiment of the invention when transporting a "bunny ear" configuration, the two blades 5 mounted on the hub 6 are pointing up in relation to a horizontal plane during the transportation. The third blade 5 (illustrated in fig. 7) is lifted and mounted separately on the hub 6 in the "bunny ear" configuration.

For this embodiment, a wind turbine tower 2, which is situated in a substantially horizontal elongation, is loaded/positioned onto a substantially horizontal positioned first boom 11 of a crane e.g. by means of wagons or auxiliary cranes. The tower 2 is resting on and/or fitted to suitable supports 14, 15 at various positions along the extend of the tower 2.

For various embodiments said fitting to the supports 14, 15 comprises that the wind turbine component, or as in the embodiment illustrated in fig. 2 the tower, is fasten to the first boom 11.

For other embodiments the nacelle 3, the hub 6 and/or one or more rotor blades 5 are transported, lifted and mounted separately.

Furthermore, for various embodiments, said first boom 11 of the crane may comprise pivoting means 13 connecting the boom 11 to the vessel e.g. via a crane base (not illustrated).

One function of the crane base and the pivoting means 13 may be to ensure sufficient connection and support between the vessel 10 and the crane comprising the boom 11.

The pivoting means 13 may, for various embodiments, have the capability of elevating the first boom 11 between horizontal and vertical position as utilized in relation to the present invention.

For an embodiment of the invention, the said crane can be moved in position and/or rotated in relation to the vessel 10 such as by one or more movable cantilevers.

According to the invention, at this stage a distal part of an elongated wind turbine component i.e. a tower 2 for this example, is connected to a second boom 12 of the crane.

The second boom 12 of the crane may for various embodiments comprise lifting means 19 which may e.g. be a derrick with a moveable gallow when lowering or lifting the attached wind turbine component such as the wind turbine tower, the nacelle and/or a rotor blade.

For various embodiments the lifting means 19 may also comprise crane cables 16 and various attaching equipment for attaching and securing the cables 16 to the specific wind turbine component to be handled.

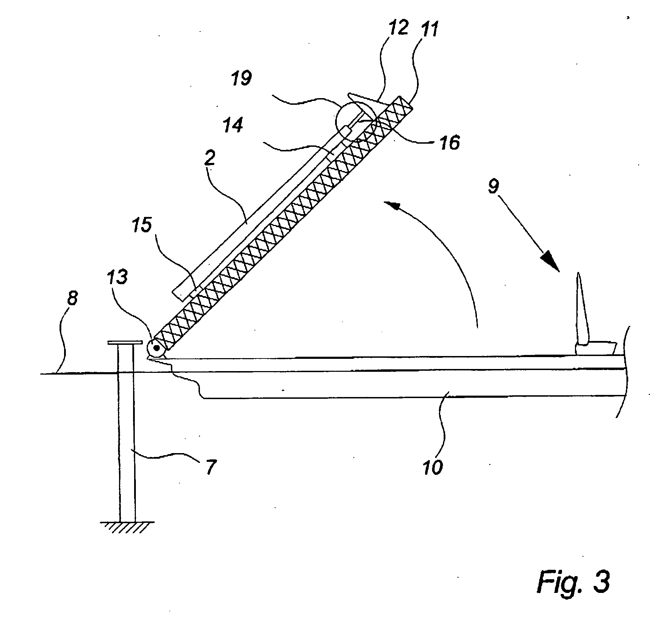

Fig. 3 illustrates schematically the first boom 11 crane being elevated to a substantial vertical position after a wind turbine tower 2 has been arranged on the first boom and connected to the second boom 12 (e.g. by a crane jib). For this example the connection comprises crane cables 16,

For this embodiment, the crane comprising the first boom 11 is elevated to the vertical position by performing a pivotal movement around the means 13 connecting the crane to e.g. a crane base established on the deck of the vessel 10 as indicated by the arrow on the figure.

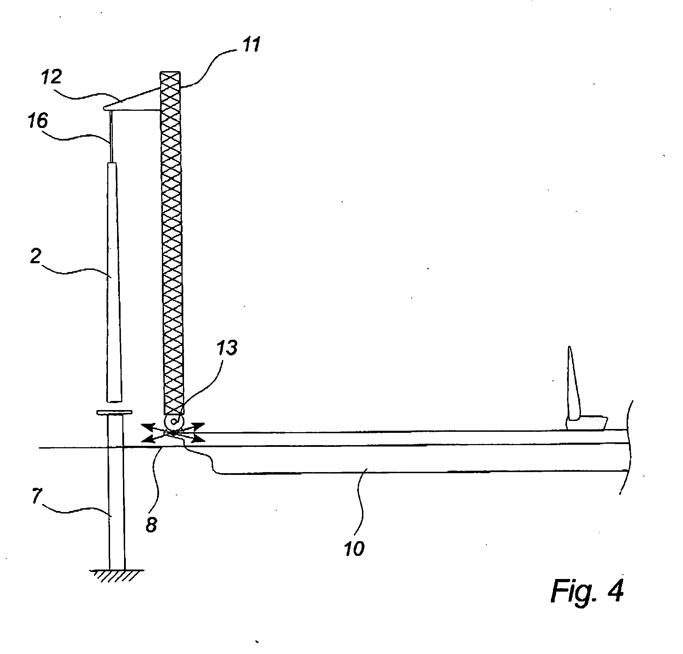

Fig. 4 illustrates schematically the crane having reached a substantial vertical position and being ready to position and lower the wind turbine tower 2 to a preinstalled foundation 7.

In one embodiment of the invention, the crane is positioned in the horizontal plane in relation to the vessel such as by positioning the crane by means of movable cantilever booms as indicated by arrows on the figure. The crane is moved in a horizontal plane to position the tower correctly in the horizontal plane over the foundation 7.

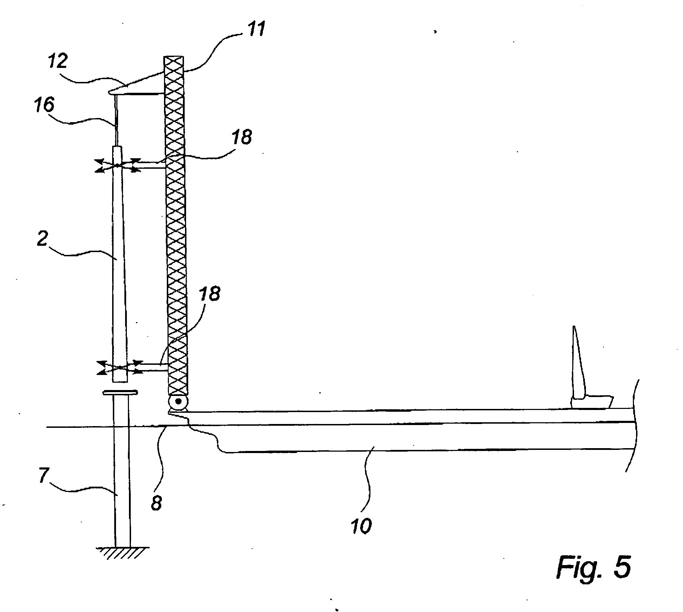

The tower 2 is in turn suspended from the second boom 12 e.g. by the crane lifting means 19. For various embodiments the tower 2 is guided in the horizontal plane at the upper and/or lower part of the tower by wind turbine component e.g. by hydraulic arms 18 mounted on the first boom and attached between the boom and the wind turbine component, to its final horizontal position as indicated by arrows on the figure 5.

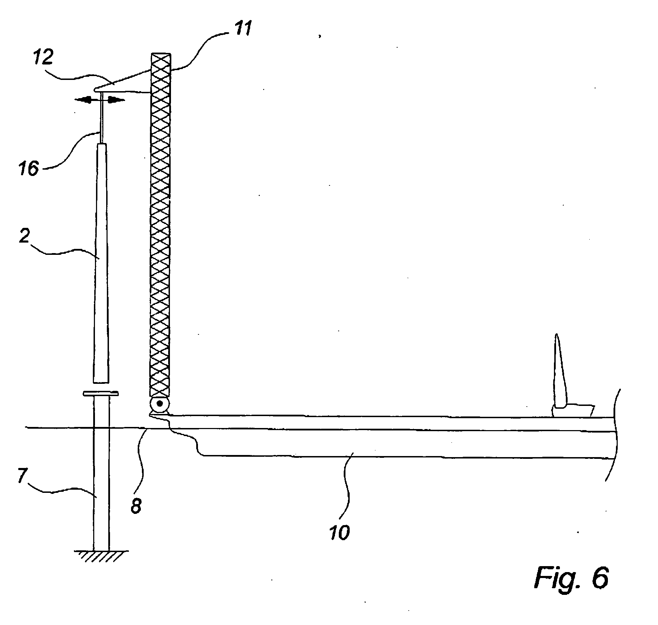

Figure 6 illustrates for this embodiment, that the positioning of the wind turbine component also can be done at the second boom 12 e.g. by the use of a derrick with a moveable gallow.

The wind turbine tower 2 is subsequently attached such as bolted to the foundation 7 when the tower 2 is correctly centred over the foundation 7 and is vertically aligned accordingly.

Finally the second boom is disconnected from the wind turbine component.

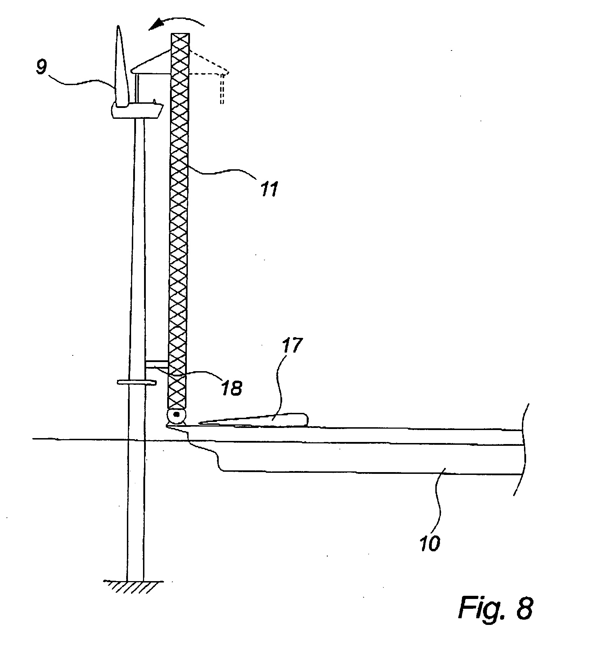

Figures 7 and 8 illustrate the lifting, rotating and positioning of a nacelle onto an installed wind turbine tower 2 with the crane.

For this embodiment the nacelle is pre-fitted with two of three wind turbine blades to a unit in a "bunny ear" configuration 9 before being lifted by the crane.

While the crane is located in the substantial vertical position after installation of the tower 2, second boom of the crane 12 is rotated from being situated above the foundation 7 and tower 2 to be situated over the vessel 10. A nacelle unit 9 is brought within the reach of the boom 12 by means of an auxiliary crane or a wagon. The cables 16 are lowered and/or the boom 12 is elevated, as indicated by arrows on figure 7, and the nacelle lifting yoke is fitted between the jib and the nacelle.

The nacelle 3 is lifted to an appropriate height above the tower top by the crane. The boom 12 is rotated about the vertical axis of the crane to be situated above the foundation 7 and tower 2 as partly illustrated by the arrow in fig. 8 and the nacelle is lowered and bolted to the tower top.

The crane is illustrated as attached to the lower part of the tower 2 with the hydraulic arms 18 while handling the nacelle unit 9.

However, for various embodiments the vessel may also be sufficiently moored as to be held in position during the handling of the nacelle unit 9 without the support of arms 18 and/or during the whole installation process.

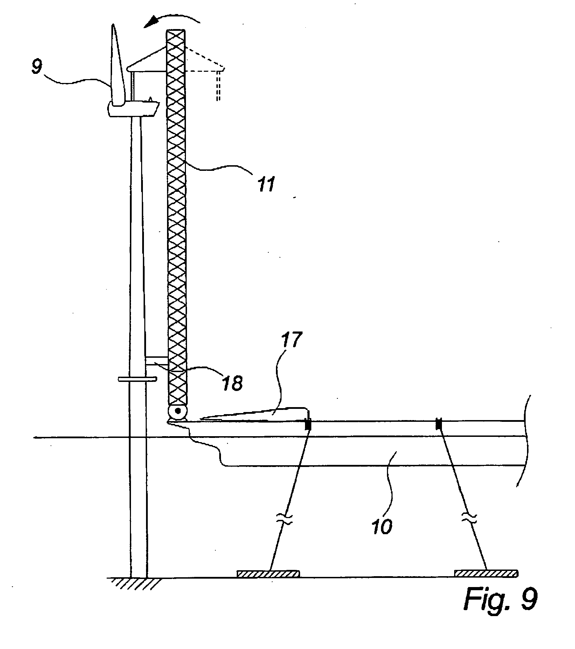

Fig. 9 illustrates one embodiment of a mooring system. The mooring system has the function of stabilizing the vessel and comprises at least one mooring unit, connection means for connecting said mooring unit to the vessel, and tractive means for stabilizing the vessel by establishing permanent tension in said connection means. Furthermore said the tractive means comprises means for lowering the connected vessel's position in relation to the water level.

By mooring unit is meant a unit that is not a part of the vessel and is free to operate in relation to the hull of said vessel. For various embodiments the mooring unit can be mobile or established at a fixed position.

By tractive means is meant means that is able to establish tension in attached connection means. Tractive means also comprises means that is able to regulate and/or dynamically control the established tension in the connection means.

By the terms permanent tension is meant that the tension in said connection means is applied without interruption when said mooring system is in use but the tension force can be altered, controlled, regulated and/or adjusted during use i.e. the tension force is not constant in relation to time.

By stabilizing said vessel in relation to the present invention is meant that the vessel can be held in positions in such a way that the influence on the movement of the vessel in all directions due to environmental parameters such as waves, tidal, current and/or wind is minimized.

By lowering the vessel's position in relation to the water level it is ensured that especially the impact of environmental parameters such as waves on the vessel movement in e.g. vertical direction is reduced.

For this embodiment the third blade 5 may be lifted and mounted separately to the hub 6 when the nacelle 3 in the "bunny ear" configuration is established. However, the third blade may also be pre-mounted vertically on the side of the tower and lifted together with the tower 2 when positioned on the foundation 7 as described by the invention. The nacelle unit 9 is then subsequently positioned on top of the tower 2 and the third blade 17 being ready for hub mounting.

Further, every wind turbine component may be mounted separately e.g. the nacelle onto the tower followed by the hub and the rotor or one rotor blade after the other.

Even further, the wind turbine may be positioned on the site by the crane as one unit with or without the foundation attached.

### List

- 1.: Wind turbine
- 2.: Tower
- 3.: Nacelle
- 4.: Rotor
- 5.: Rotor blade
- 6.: Hub
- 7.: Foundation
- 8.: Ground or sea level
- 9.: Unit of a nacelle/hub and two blades in a "bunny ear" configuration
- 10.: Vessel
- 11.: First boom of the crane
- 12.: Second boom of the crane
- 13.: Pivoting means
- 14.: First support
- 15.: Second support
- 16.: Crane cables
- 17.: Third wind turbine blade
- 18.: Hydraulic arm mounted on first boom
- 19.: Crane lifting means

## Claims

1. A method for transporting and erecting a wind turbine (1) on an offshore site, said method comprises the steps of:
- positioning a first boom (11) of a crane in a substantially horizontal position, said first boom being a fixed length boom, and said crane being located on a vessel (10) on which said wind turbine component is transported,
- arranging a substantially horizontal positioned elongated wind turbine component on said first boom (11),
- connecting a distal part of said elongated wind turbine component to a second boom (12) of said crane, said distal part is the upper part of the wind turbine component when the wind turbine is erected, and said second boom (12) is extending at an angle from the longitudinal extension of said first boom (11),
- elevating said first boom (11) to a substantially vertical position,
- modifying the position in the horizontal plane of said elongated wind turbine component, in order to reach a desired erecting position for the component, and
- disconnecting said distal part of said elongated wind turbine component from said second boom (12) of said crane,
**characterised in that** said modification of the position in the horizontal plane is performed by positioning said crane in the horizontal plane in relation to the vessel (10) and/or by positioning said elongated wind turbine component in relation to said first boom (11) of the crane.

2. A method according to claim 1, wherein said elongated wind turbine component comprises an assembly of a wind turbine tower (2), wind turbine nacelle (3) and wind turbine rotor (4).

3. A method according to claim 1, wherein said elongated wind turbine component is a wind turbine tower (2).

4. A method according to any of the preceding claims, wherein said elongated wind turbine component includes the foundation (7) or parts of the foundation.

5. A method according to any of the preceding claims 1 to 4, wherein said method further comprises the step of mooring the vessel (10) substantially at the desired erecting position for the component.

6. A vessel (10) for transporting and erecting a wind turbine on an offshore site, said vessel comprises at least one crane comprising:
- a first boom (11) of the crane prepared for holding an elongated wind turbine component, said first boom being a fixed length boom,
- an elevation drive for elevating said first boom together with the elongated wind turbine component between substantially horizontal position and substantially vertical position,
- a second boom (12) connected to said first boom (11) of the crane,
- a connector for connecting a distal part of the elongated wind turbine component arranged on said first boom (11) to said second boom (12) of the crane, said distal part being the upper part of the wind turbine component when the wind turbine is erected, and
- one or more mechanisms for modifying the position in the horizontal plane of said elongated wind turbine component when connected to the connector, in order to reach a desired erecting position for the component,
**characterised in that** said one or more mechanisms for modifying the position in the horizontal plane of said elongated wind turbine component is prepared for moving said crane in relation to the vessel (10) and/or is prepared for moving said elongated wind turbine component in relation to said first boom (11), thereby enabling a purely horizontal positioning of said elongated wind turbine component, including a purely horizontal adjustment of the distance of said elongated wind turbine component in relation to the vessel.

7. A vessel (10) according to claim 6, wherein said second boom (12) extends at an angle from the longitudinal extension of said first boom (11), said angle is in the range of 90° ± 45°.

8. A vessel (10) according to any of claims 6 - 7, wherein said vessel has room for holding more than one elongated wind turbine component at a time.

9. A vessel (10) according to any of claims 6 - 8, wherein said one or more mechanisms for modifying the position in the horizontal plane of said elongated wind turbine component comprises crane positioning means comprising moveable cantilever booms for positioning the crane in a horizontal plane.

10. A vessel (10) according to any of claims 6 - 9, wherein said one or more mechanisms for modifying the position in the horizontal plane of said elongated wind turbine component comprises hydraulic arms (18) mounted on the first boom (10) and to be attached between the boom and the wind turbine component.

11. A vessel (10) according to any of claims 6 - 10, wherein said one or more mechanisms for modifying the position in the horizontal plane of said elongated wind turbine component comprises a derrick positioned at the second boom (12).

12. Use of a vessel (10) according to any of the claims 6 - 11 for erecting a wind turbine on an offshore site.

## Patentansprüche

1. Verfahren zum Transportieren und Aufstellen einer Windturbine (1) an einem Standort in küstennahen Gewässern, wobei das Verfahren die folgenden Schritte umfasst:
- Positionieren eines ersten Auslegers (11) eines Krans in einer im Wesentlichen horizontalen Position, wobei der erste Ausleger ein Ausleger mit fester Länge ist und der Kran sich auf einem Schiff (10) befindet, auf dem auch die Windturbinenkomponente transportiert wird,
- Ausrichten einer im Wesentlichen horizontal positionierten länglichen Windturbinenkomponente auf dem ersten Ausleger (11),
- Verbinden eines entfernt liegenden Teils der länglichen Windturbinenkomponente mit einem zweiten Ausleger (12) des Krans, wobei dieser entfernt liegende Teil der obere Teil der Windturbinenkomponente ist, wenn die Windturbine aufgestellt wird, und wobei der zweite Ausleger (12) sich in einem Winkel von der Längsausdehnung des ersten Auslegers (11) erstreckt,
- Aufrichten des ersten Auslegers (11) in eine im Wesentlichen vertikale Position,
- Verändern der Position der länglichen Windturbinenkomponente in der horizontalen Ebene, um eine gewünschte Position für das Aufstellen der Komponente zu erreichen, und
- Trennen des entfernt liegenden Teils der länglichen Windturbinenkomponente vom zweiten Ausleger (12) des Krans,
**dadurch gekennzeichnet, dass** das Verändern der Position in der horizontalen Ebene durch das Positionieren des Krans in der horizontalen Ebene relativ zum Schiff (10) und/oder durch das Positionieren der länglichen Windturbinenkomponente relativ zum ersten Ausleger (11) des Krans ausgeführt wird.

2. Verfahren nach Anspruch 1, wobei die längliche Windturbinenkomponente eine Gruppe aus einem Windturbinenturm (2), einer Windturbinengondel (3) und einem Windturbinenrotor (4) umfasst.

3. Verfahren nach Anspruch 1, wobei die längliche Windturbinenkomponente ein Windturbinenturm (2) ist.

4. Verfahren nach einem der vorhergehenden Ansprüche, wobei die längliche Windturbinenkomponente ein Fundament (7) oder Teile eines Fundaments umfasst.

5. Verfahren nach einem der Ansprüche 1 bis 4, wobei das Verfahren außerdem den Schritt umfasst, das Schiff (10) im Wesentlichen an der gewünschten Aufstellposition für die Komponente zu verankern.

6. Schiff (10) zum Transportieren und Aufstellen einer Windturbine an einem Standort in küstennahen Gewässern, wobei das Schiff wenigstens einen Kran umfasst und wobei der Kran Folgendes umfasst:
- einen ersten Ausleger (11) des Krans, der dafür eingerichtet ist, eine längliche Windturbinenkomponente zu halten, wobei der erste Ausleger ein Ausleger mit fester Länge ist,
- einen Aufrichtungsantrieb zum Aufrichten des ersten Auslegers zusammen mit der länglichen Windturbinenkomponente zwischen einer im Wesentlichen horizontalen Position und einer im Wesentlichen vertikalen Position,
- einen zweiten Ausleger (12), der mit dem ersten Ausleger (11) des Krans verbunden ist,
- eine Verbindungsvorrichtung zum Verbinden eines entfernt liegenden Teils der auf dem ersten Ausleger (11) angeordneten länglichen Windturbinenkomponente mit dem zweiten Ausleger (12) des Krans, wobei der entfernt liegende Teil der obere Teil der Windturbinenkomponente ist, wenn die Windturbine aufgestellt wird, und
- ein oder mehrere mechanische Vorrichtungen zum Verändern der Position der länglichen Windturbinenkomponente in der horizontalen Ebene, wenn diese mit der Verbindungsvorrichtung verbunden ist, um eine gewünschte Aufstellposition für die Komponente zu erreichen,
**dadurch gekennzeichnet, dass** die eine oder mehreren mechanischen Vorrichtungen zum Verändern der Position der länglichen Windturbinenkomponente in der horizontalen Ebene dafür eingerichtet sind, den Kran relativ zum Schiff (10) zu bewegen und/oder dafür eingerichtet sind, die längliche Windturbinenkomponente relativ zum ersten Ausleger (11) zu bewegen, und hierdurch eine rein horizontale Positionierung der länglichen Windturbinenkomponente zu ermöglichen, was eine rein horizontale Einstellung des Abstands der länglichen Windturbinenkomponente relativ zum Schiff umfasst.

7. Schiff (10) nach Anspruch 6, wobei der zweite Ausleger (12) sich in einem Winkel von der Längsausdehnung des ersten Auslegers (11) erstreckt und wobei dieser Winkel im Bereich von 90° ± 45° liegt.

8. Schiff (10) nach einem der Ansprüche 6 bis 7, wobei das Schiff Platz zum gleichzeitigen Aufnehmen von mehr als einer länglichen Windturbinenkomponente hat.

9. Schiff (10) nach einem der Ansprüche 6 bis 8, wobei die eine oder mehreren mechanischen Vorrichtungen zum Verändern der Position der länglichen Windturbinenkomponente in der horizontalen Ebene ein Kranpositionierungsmittel umfassen, das bewegliche Auslegerarme zum Positionieren des Krans in der horizontalen Eben umfasst.

10. Schiff (10) nach einem der Ansprüche 6 bis 9, wobei die eine oder mehreren mechanischen Vorrichtungen zum Verändern der Position der länglichen Windturbinenkomponente in der horizontalen Ebene hydraulische Arme (18) umfassen, die am ersten Ausleger (10) montiert sind und die zwischen dem Ausleger und der Windturbinenkomponente angebracht werden.

11. Schiff (10) nach einem der Ansprüche 6 bis 10, wobei die eine oder mehreren mechanischen Vorrichtungen zum Verändern der Position der länglichen Windturbinenkomponente in der horizontalen Ebene einen Derrickkran umfassen, der am zweiten Ausleger (12) positioniert ist.

12. Verwendung eines Schiffes (10) nach einem der Ansprüche 6 bis 11 zum Aufstellen einer Windturbine an einem Standort in küstennahen Gewässern.

## Revendications

1. Procédé pour transporter et ériger une éolienne (1) sur un site offshore, ledit procédé comprenant les étapes consistant à :
positionner une première flèche (11) d'une grue dans une position sensiblement horizontale, ladite première flèche étant une flèche à longueur fixe, ladite grue étant positionnée sur un bateau (10) sur lequel ledit composant d'éolienne est transporté,
agencer un composant d'éolienne allongé positionné de manière sensiblement horizontale sur ladite première flèche (11),
raccorder une partie distale dudit composant d'éolienne allongé à une deuxième flèche (12) de ladite grue, ladite partie distale est la partie supérieure du composant d'éolienne lorsque l'éolienne est érigée, et ladite deuxième flèche (12) s'étend selon un angle à partir de l'extension longitudinale de ladite première flèche (11),
lever ladite première flèche (11) dans une position sensiblement verticale,
modifier la position, dans le plan horizontal, dudit composant d'éolienne allongé, afin d'atteindre une position d'érection souhaitée pour le composant, et
déconnecter ladite partie distale dudit composant de turbine allongé de ladite deuxième flèche (12) de ladite grue,
**caractérisé en ce que** ladite modification de la position dans le plan horizontal est réalisée en positionnant ladite grue dans le plan horizontal par rapport au bateau (10) et/ou en positionnant ledit composant de turbine allongé par rapport à ladite première flèche (11) de la grue.

2. Procédé selon la revendication 1, dans lequel ledit composant d'éolienne allongé comprend un ensemble composé d'une tour d'éolienne (2), d'une nacelle d'éolienne (3) et d'un rotor d'éolienne (4).

3. Procédé selon la revendication 1, dans lequel ledit composant d'éolienne allongé est une tour d'éolienne (2).

4. Procédé selon l'une quelconque des revendications précédentes, dans lequel ledit composant d'éolienne allongé comprend la fondation (7) ou des parties de la fondation.

5. Procédé selon l'une quelconque des revendications 1 à 4 précédentes, dans lequel ledit procédé comprend en outre l'étape consistant à amarrer le bateau (10) sensiblement dans la position d'érection souhaitée pour le composant.

6. Bateau (10) pour transporter et ériger une éolienne sur un site offshore, ledit bateau comprend au moins une grue comprenant :
une première flèche (11) de la grue préparée pour maintenir un composant d'éolienne allongé, ladite première flèche étant une flèche à longueur fixe,
un dispositif d'entraînement d'élévation pour lever ladite première flèche conjointement avec le composant d'éolienne allongé entre une position sensiblement horizontale et une position sensiblement verticale,
une deuxième flèche (12) raccordée à ladite première flèche (11) de la grue,
un connecteur pour raccorder une partie distale du composant d'éolienne allongé agencée sur ladite première flèche (11), à ladite deuxième flèche (12) de la grue, ladite partie distale étant la partie supérieure du composant d'éolienne lorsque l'éolienne est érigée, et
un ou plusieurs mécanismes pour modifier la position dans le plan horizontal dudit composant d'éolienne allongé lorsqu'il est raccordé au connecteur, afin d'atteindre une position d'érection souhaitée pour le composant,
**caractérisé en ce que** lesdits un ou plusieurs mécanismes pour modifier la position dans le plan horizontal dudit composant d'éolienne allongé sont préparés pour déplacer ladite grue par rapport au bateau (10) et/ou sont préparés pour déplacer ledit composant d'éolienne allongé par rapport à ladite première flèche (11), permettant ainsi un positionnement purement horizontal dudit composant d'éolienne allongé, comprenant un ajustement purement horizontal de la distance dudit composant d'éolienne allongé par rapport au bateau.

7. Bateau (10) selon la revendication 6, dans lequel ladite deuxième flèche (12) s'étend selon un angle à partir de l'extension longitudinale de ladite première flèche (11), ledit angle est de l'ordre de 90°± 45°.

8. Bateau (10) selon l'une quelconque des revendications 6 à 7, dans lequel ledit bateau a de la place pour contenir plus d'un composant d'éolienne allongé à la fois.

9. Bateau (10) selon l'une quelconque des revendications 6 à 8, dans lequel lesdits un ou plusieurs mécanismes pour modifier la position dans le plan horizontal dudit composant d'éolienne allongé comprennent des moyens de positionnement de grue comprenant des flèches en porte-à-faux mobiles pour positionner la grue dans un plan horizontal.

10. Bateau (10) selon l'une quelconque des revendications 6 à 9, dans lequel lesdits un ou plusieurs mécanismes pour modifier la position dans le plan horizontal dudit composant d'éolienne allongé comprennent des bras hydrauliques (18) montés sur la première flèche (10) et doivent être fixés entre la flèche et le composant d'éolienne.

11. Bateau (10) selon l'une quelconque des revendications 6 à 10, dans lequel lesdits un ou plusieurs mécanismes pour modifier la position dans le plan horizontal dudit composant d'éolienne allongé comprennent un mât de charge positionné au niveau de la deuxième flèche (12).

12. Utilisation d'un bateau (10) selon l'une quelconque des revendications 6 à 11, pour ériger une éolienne sur un site offshore.
